# EUROPEAN PATENT APPLICATION

(11) **EP 2 230 442 A1**
(43) Date of publication of application: **22.09.2010**
(21) Application number: 08871253.4
(22) Date of filing: 21.10.2008
(51) Int. Cl.: F21S 2/00, F21V 23/00, F21V 23/06, G02F 1/133, G02F 1/13357, F21Y 103/00

(54) **ILLUMINATING DEVICE, DISPLAY DEVICE AND TELEVISION RECEIVER**

(30) Priority: 22.01.2008 JP 2008011514
(71) Applicant: Sharp Kabushiki Kaisha, Osaka-shi, Osaka 545-8522 (JP)
(72) Inventor: KUNII, Hiroshi, Osaka 545-8522 (JP)
(74) Representative: Müller-Boré & Partner Patentanwälte
(86) International application number: PCT/JP2008/069059
(87) International publication number: WO 2009/093363

(57) **Abstract**

A lighting device 12 of the present invention includes a plurality of light sources 17, a regulator circuit 50 and a driver circuit 40. The regulator circuit 50 is configured to adjust balance of current flow between the light sources 17. The driver circuit 40 is configured to supply drive power to the light sources 17 via the regulator circuit 50. The regulator circuit 50 includes two sections provided on the first board 31 and the second board 32 that is arranged adjacent to the first board 31, respectively.O The regulator circuit 50 and the driver circuit 40 are provided on the first board 31.

## Description

### TECHNICAL FIELD

The present invention relates to a lighting device, a display device and a television receiver.

### BACKGROUND ART

A liquid crystal panel included in a liquid crystal display device does not emit light, and thus a backlight device is required as a separate lighting device. The backlight device is arranged behind the liquid crystal panel (i.e., on a side opposite from a display surface side). It includes a metal or resin chassis having an opening on a liquid crystal panel side, a plurality of fluorescent tubes (e.g., cold cathode tubes) as light sources, and an inverter board that controls on-off operation of the fluorescent tubes.

The inverter board generally includes a high voltage output section that outputs drive power to drive the fluorescent tubes and ballast capacitors for adjusting current balance between the fluorescent tubes. A driver circuit that includes the high voltage output section and a regulator circuit that includes the ballast capacitors are provided on separate boards arranged with a gap therebetween in known configurations. In such configurations, drive power output from the high voltage section is supplied to the fluorescent tubes via the ballast capacitors. Therefore, a high voltage line for supplying the drive power is required between the board on which the high voltage section is provided and the board on which the ballast capacitors are provided.

The above-described high voltage line carries a high-voltage current. To reduce leak currents to peripheral components, it needs to be wrapped by an insulating material and gaps are required between the high voltage line and the peripheral components. Because of such circumstances, the high voltage line can be an obstacle for decreasing the thicknesses of liquid crystal display devices. Further, the longer the high voltage line, the larger the power dissipation. Therefore, a decrease in the luminance of the fluorescent tubes or uneven luminance may occur. Still further, the longer high voltage line has more chances to be broken and thus more chances to cause a current leakage to the peripheral components. To solve such a problem, a backlight device in which a relatively short high-voltage line is used is disclosed in Patent Document 1.

The backlight device disclosed in Patent Document 1 includes long fluorescent tubes and short fluorescent tubes. To connect the fluorescent tubes to an inverter circuit, the fluorescent tubes having different lengths are connected in parallel to a high voltage output section of a transformer included in an inverter circuit via ballast capacitors. The capacitance of the ballast capacitors connected to the long fluorescent tubes is set larger than that of the ballast capacitors connected to the short fluorescent tubes. Namely, the ballast capacitors, the capacitance of which is variable, are connected to the high-voltage output section on one board and the capacitance of the ballast capacitors is adjusted according to the lengths of the fluorescent tubes. Because the ballast capacitors and the high-voltage output section are connected with each other on one board, the distances between them are small and thus the high-voltage lines for connecting them are small in length. As a result, power dissipation is less likely to occur and a high level of safety can be achieved. Moreover, power dissipation in the high voltage lines between the ballast capacitors and the fluorescent tubes can be compensated by adjusting the capacitance of the ballast capacitors. Therefore, uneven luminance of the fluorescent tubes is less likely to occur.
Patent Document 1: Japanese Published Patent Application No. 2001-307531

### (Problem to be Solved by the Invention)

In recent years, a demand for different sizes of liquid crystal display devices for different applications has been increasing. Especially, the development of large-size liquid crystal display devices has been in progress. A preferable configuration of a large-size liquid crystal display device is that a plurality of fluorescent tubes are arranged directly behind a liquid crystal display panels to achieve a uniform luminance distribution. Namely, a direct backlight is preferable. When a large number of the fluorescent tubes are arranged, the same number of ballast capacitors is required for adjusting current balance between the fluorescent tubes.

When a large number of the fluorescent tubes are arranged in a large-size liquid crystal display device, distances between ballast capacitors and the fluorescent tubes or between the ballast capacitors and a high-voltage output section are large. Therefore, high-voltage lines for making connection between them need to be large in length. Moreover, the number of fluorescent tubes differs according to the size of liquid crystal devices. To arrange ballast capacitors for corresponding the number of the fluorescent tubes, different boards are required for high-voltage sections and ballast capacitors for different sizes of the liquid crystal display devices. In known configurations, such as one disclosed in Patent Document 1, all boards including inverter circuits need to be design separately to correspond to the number of the fluorescent tubes. This causes an increase in coat of the liquid crystal display devices.

### DISCLOSURE OF THE PRESENT INVENTION

The present invention was made in view of the foregoing circumstances. An object of the present invention is to provide a lighting device including a circuit board that can support the different number of light sources without using a long high voltage lines and contributing to a cost reduction while high level of safety is achieved. Another object of the present invention is to provide display device including such a lighting device and a television receiver including such a display device.

### (Means for Solving the Problem)

To solve the above problem, a lighting device of the present invention includes a plurality of light sources, a regulator circuit and at least one driver circuit. The regulator circuit is configured to adjust a balance of current flows between the light sources. The driver circuit is configured to supply drive power to the light sources via the regulator circuit. The regulator circuit includes the first section provided on the first board and the second section provided on the second board arranged adjacent to the first board. The driver circuit is provided on the first board on which the first section of the regulator circuit is provided.

In this configuration, the regulator circuit and the driver circuits are provided on the same board (the first board). Namely, a high voltage line that connects the regulator circuit to the driver circuit is not routed between separate boards. Therefore, current leakages to peripheral components are less likely to occur.
If the driver circuit and the regulator circuit are provided on separate boards, a high-voltage line is routed from one board to the other for supplying driver power for the light sources from the driver circuit to the regulator circuit. However, such a high-voltage line may create a current leakage and thus it needs to be wrapped by an insulating material and space between the high voltage line and peripheral components thereof are required to reduce the current leakage.
Because the first board and the second board are arranged adjacent to each other, only minimum length of the high-voltage line that connects them is required. More specifically, opposed sides of the first board and the second board are in contact with each other or slightly away from each other. Namely, currant leakages from the high-voltage line to the peripheral components are less likely to occur. Therefore, a high level of safety is achieved and a size of space required around the high-voltage line is reduced or the space may not be required even in a thin lighting device in which components are densely packed. Namely, the arrangement of the components can be designed at a high degree of flexibility.

The regulator circuit has a function for adjusting the balance of the current flows between the light sources. One regulator circuit is required for one unit of light sources and thus a circuit pattern corresponding to an arrangement pattern of the light sources (e.g., the number of the light sources to be arranged) needs to be designed for the regulator circuit. In the configuration of the present invention, the regulator circuit includes two sections, one of which is provided on the first board and the other is provided on the second board. When the size of the lighting device is changed and thus the number of the light sources is changed, only the second board needs to be replaced by another board on which a regulator section having a different circuit pattern is provided. Namely, the first board on which the other section of the regulator circuit and the driver circuit are provided can be still used regardless of the size change. This contributes to a cost reduction.

In the lighting device of the present invention, the light sources are linear light sources. The first board and the second board are arranged so as to overlap ends of the linear light sources.
With this configuration, only minimum distances are required between the ends of the linear light sources and the first board or the second board. Therefore, connecting parts in small lengths are required for connecting the ends of the linear light sources to the respective boards. This contributes a cost reduction. Furthermore, current leakages to the peripheral components are less likely to occur and thus a high level of safety can be achieved.

The first boards are arranged such that one of the first boards overlaps the ends of the light sources at one end and another overlaps the ends of the light sources at another end. The driver circuits are provided on the first board arranged so as to overlap the ends of the light sources at one end and on the other first board arranged so as to overlap the ends of the light sources at the other end. They are connected with each other via a synchronizing signal line for transmitting a signal for synchronizing power supplies from the driver circuits.

In this configuration, drive power outputs from the different driver circuits are supplied to the ends of the linear light sources according to predetermined rules on the amounts and timing. By synchronizing the driver power supplies from the different driver circuits so as to the same amount of power is supplies at the same time, the linear light sources turn on with uniform luminance. As a result, the lighting device can provide uniform luminance distribution.

The lighting device of the present invention includes a chassis for housing the light sources. The first board and the second board are mounted to the chassis. The synchronizing signal line is routed in contact with the chassis.
Since only very weak current flows through the synchronizing signal line, space is not required around the signal line. The signal line can be routed in contact with the chassis. Namely, the synchronizing signal line can be designed at a high degree of flexibility without consideration to relative locations to the peripheral components. This is preferable in design for a thin lighting device.

The lighting device further includes connectors arranged on the first board and the second board for making electrical connection between the driver circuit and the light sources. Some of the connectors are arranged on a linear alignment line. At least one of connectors adjacent to any one of the connectors arranged on the alignment line is arranged off the alignment line.

By arranging at least one of the connectors adjacent to the one arranged on the alignment line off the alignment line, it is not aligned with the adjacent connectors. Therefore, the adjacent connectors are arranged with a large distance therebetween in comparison to the ones arranged in line. This makes assembly work easier and ensures safety.
The connectors have functions for making electrical connection between the light sources and the first board or the second board. Therefore, they are arranged according to the arrangement of the light sources. To provide light with high and uniform luminance, a large number of the light sources should be installed. The light sources are arranged at small intervals and thus the connectors corresponding to the light sources are also arranged at small intervals because an area on a power supply board in which the connecters can be arranged is limited. When mounting one of the connectors on the first board or the second board, the adjacent connector that has been already mounted on the board interferes with the mounting work and makes the mounting work difficult. Furthermore, when the interval between the adjacent connectors is small, an electrical discharge may occur between the connectors.
According to the lighting device of the present invention, the connectors adjacent to one of the connectors arranged on the alignment line are arranged off the alignment line. Therefore, even when the light sources are closely arranged, the interval between them is relatively large. This makes the mounting work of the connectors easy and reduces the electrical discharge between the connectors.

Preferable relative locations of the connectors are such that the one on the alignment line and the adjacent connectors are arranged in a staggered layout. In this arrangement, even larger space can be provided between them even though they area arranged in the limited area.

The connectors include the first connector parts mounted on the first board and the second board, and the second connector parts attached to the first connector parts such that they can be removed from the first connector parts in a direction that crosses board surfaces of the first and the second boards.

When mounting the connectors on the first board and the second board, the second connector part is held and brought closer to the first connector part that is already mounted on the first board or the second board along the direction that crosses the board surface of the first board or the second board. Especially when the mounting work is done manually, ends of the second connector part are held by fingers. If the space between the adjacent connectors is small, the second connector part or the fingers holding the second connector part may touch the adjacent connector that is already mounted, and the mounting work is obstructed. When removing the second connector part from the first connector part, the ends of the second connecter need to be held but the adjacent connectors may be in the way.
According to the lighting device of the present invention, the space between the connectors is relatively large. Therefore, the adjacent connectors are not in the way during the attachment work of the second connector part to the first connector part and thus the attachment work is easily done.

Next, to solve the above problems, a display device of the present invention includes the above-described lighting device and a display panel a display panel configured to provide display using light from the lighting device.
The display device includes the lighting device provided with a high level of safety at low cost. Thus, safety of the display device is ensured and cost thereof is reduced.

A liquid crystal panel can be used for the display panel. The display device can be used in different applications, for example, television receivers and personal computer monitors. Especially, it is preferably used in large-screen applications.

### (Effect of the Invention)

A television receiver of the present invention includes the above-described display device.
The television receiver includes the display device provided with a high level of safety at low cost. Therefore, the television receiver can be provided with a high level of safety at low price.

### (Effect of the Invention)

According to the lighting device of the present invention, the circuit board can support different arrangement of the light sources, that is, different numbers of the light sourced without routing a long high voltage line. Therefore, a high level of safety can be achieved at low cost even though the thickness of the lighting device is reduced. Further, because the display device of the present invention includes such a lighting device, safety of the display device is ensured and cost thereof is reduced even though the thickness thereof is reduced. Still further, because the television receiver of the present invention includes such a display device, it can be provided with a high level of safety at low cost even though the thickness thereof is reduced.

### BRIEF DESCRIPTION OF THE DRAWINGS

[FIG. 1] is an exploded perspective view illustrating a general construction of a television receiver according to the first embodiment of the present invention;
[FIG. 2] is an exploded perspective view illustrating a general construction of a liquid crystal display device included in the television receiver in FIG. 1;
[FIG. 3] is a cross-sectional view of the liquid crystal display device in FIG. 2 along the short-side direction;
[FIG. 4] is a cross-sectional view of the liquid crystal display device in FIG. 2 along the long-side direction;
[FIG. 5] is a plan view illustrating general configurations of inverter board sets included in the liquid crystal display device in FIG. 2;
[FIG. 6] is a plan view illustrating the first board included in each invert board set in FIG. 5;
[FIG. 7] is a plan view illustrating the second board included in each invert board set in FIG. 5;
[FIG. 8] is a plan view illustrating a board that can be used instead of the second board in FIG. 7;
[FIG. 9] is a plan view illustrating general configurations of inverter board sets included in a backlight device according to the second embodiment of the present invention;
[FIG. 10] is a plan view illustrating the first board included in each invert board set in FIG. 9;
[FIG. 11] is a plan view illustrating the second board included in each invert board set in FIG. 9;
[FIG. 12] is a top view illustrating one of first connector parts included in connectors arranged in the inverter board sets in FIG. 9;
[FIG. 13] is a side view of the first connector part in FIG. 12;
[FIG. 14] is a bottom view of one of the second connector parts included in the connectors;
[FIG. 15] is a side view of the second connector part in FIG. 14; [FIG. 16] is a plan view illustrating modifications of the arrangements of the first and the second boards;
[FIG. 17] is a plan view illustrating modifications of the arrangements of the connectors; and
[FIG. 18] is a plan view illustrating modifications of the arrangements of the connectors.

### Explanation of Symbols

10: Liquid crystal display device (Display device), 11: Liquid crystal panel (Display panel), 12: Backlighting device (Lighting device), 14: Chassis, 17: Cold cathode tube (Light source), 31: First board, 32: Second board, 40: Driver circuit, 44: Synchronizing signal line, 50: Regulator circuit, 90: Connector, 91: First connector part, 92: Second connector part, TV: Television receiver.

### BEST MODE FOR CARRYING OUT THE INVENTION

### <First embodiment>

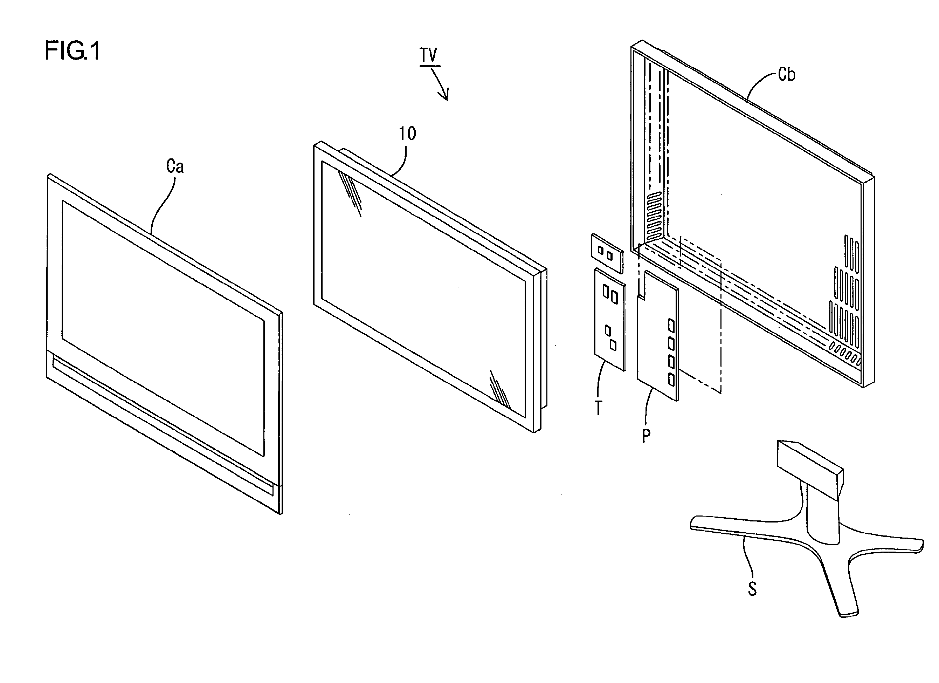

The first embodiment of the present invention will be explained with reference to FIGS. 1 to 8.
First, a television receiver TV including a liquid crystal display device 10 will be explained.

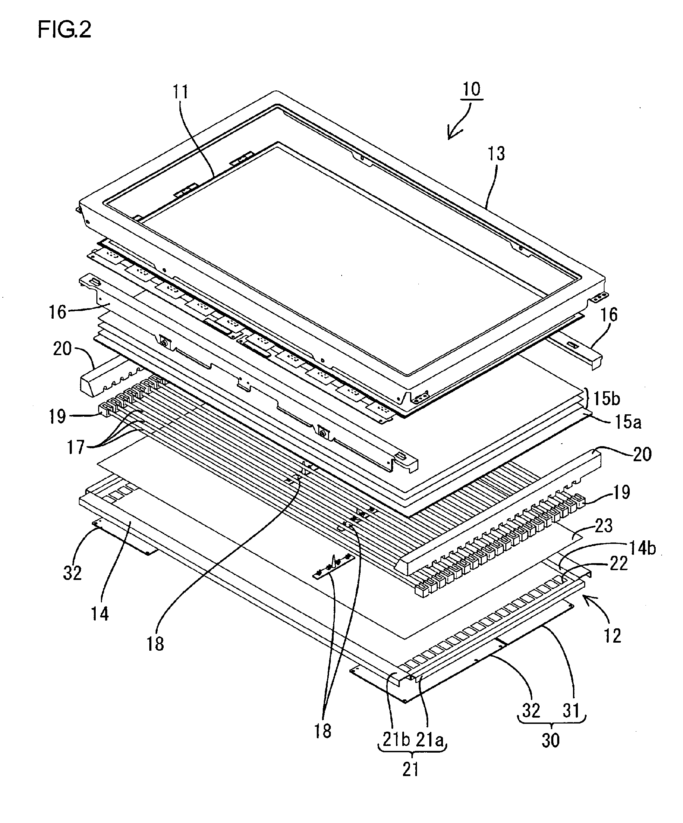

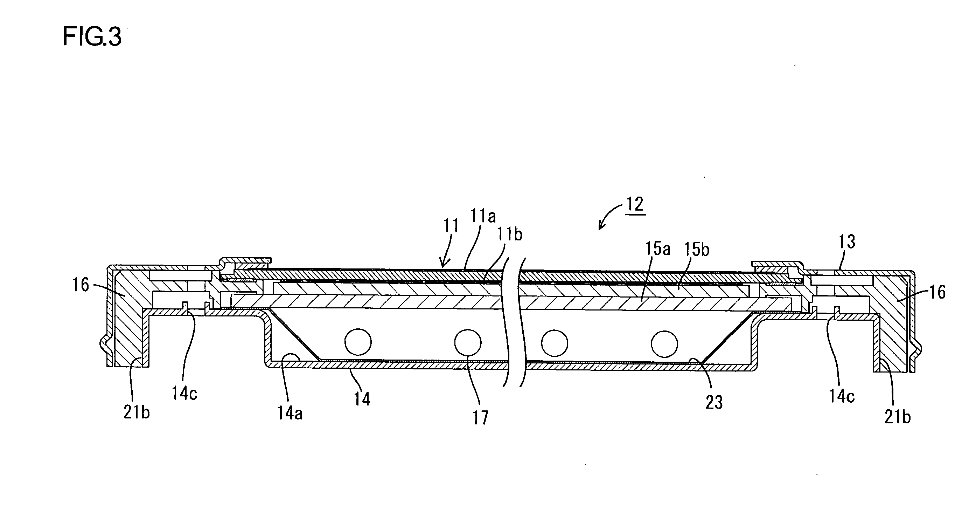

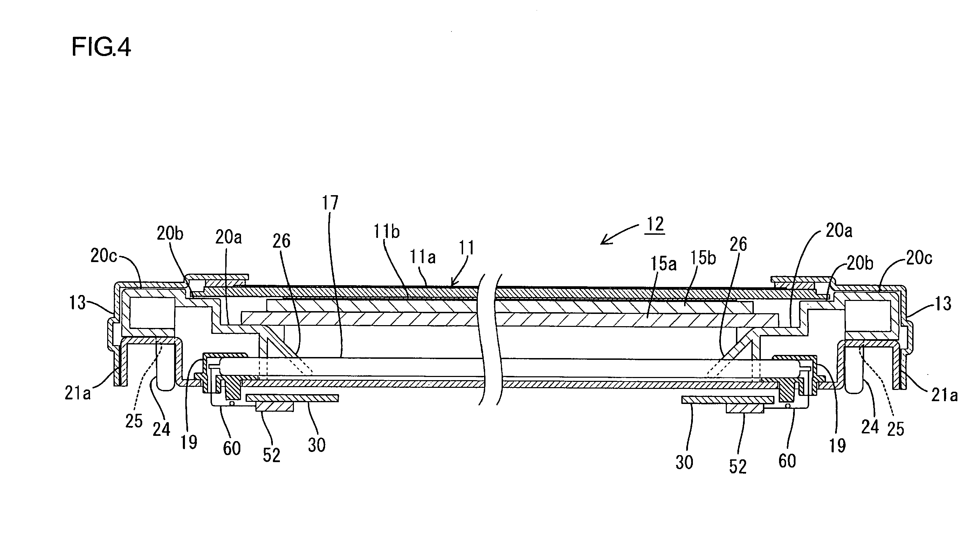

FIG. 1 is an exploded perspective view illustrating a general construction of the television receiver of this embodiment. FIG. 2 is an exploded perspective view illustrating a general construction of the liquid crystal display device included in the television receiver in FIG. 1. FIG. 3 is a cross-sectional view of the liquid crystal display device in FIG. 2 along the short-side direction. FIG. 4 is a cross-sectional view of the liquid crystal display device in FIG. 2 along the long-side direction.

As illustrated in FIG. 1, the television receiver TV of the present embodiment includes the liquid crystal display device 10, front and rear cabinets CA, CB that house the liquid crystal display device 10 therebetween, a power source P, a tuner T and a stand S. An overall shape of the liquid crystal display device (display device) 10 is a landscape rectangular. As illustrated in FIG. 2, the liquid crystal display device 10 includes a liquid crystal panel 11 as a display panel and a backlight device 12 (lighting device) as an external light source. They are integrally held by a bezel 13 and the like.

Next, the liquid crystal panel 11 and the backlight device 12 included in the liquid crystal display device 10 will be explained (see FIGS. 2 to 4).
The liquid crystal panel (display panel) 11 is constructed such that a pair of glass substrates is bonded together with a predetermined gap therebetween and liquid crystal is sealed between the glass substrates. On one of the glass substrates, switching components (e.g., TFTs) connected to source lines and gate lines that are perpendicular to each other, pixel electrodes connected to the switching components, and an alignment film are provided. On the other substrate, counter electrodes, color filter having color sections such as R (red), G (green) and B (blue) color sections arranged in a predetermined pattern, and an alignment film are provided. Polarizing plates 11a, 11b are attached to outer surfaces of the substrates (see FIGS. 3 and 4).

As illustrated in FIG. 2, the backlight device 12 includes a chassis 14, a diffuser plate 15a, a plurality of optical sheets 15b and frames 16. The chassis 14 has a substantially box-shape and an opening 14b on the light emitting side (on the liquid crystal panel 11 side). The diffuser plate 15a are arranged so as to cover the opening 14b of the chassis 14. The optical sheets 15b are arranged between the diffuser plate 15a and the liquid crystal panel 11. The frames 16 arranged along the long sides of the chassis 14 holds the long-side edges of the diffuser plate 15a to the chassis 14. The long-side edges of the diffuser plate 15a are sandwiched between the chassis 14 and the frames 16. Cold cathode tubes (light sources) 17, lamp clips 18, relay connectors 19 and lamp holders 20 are installed in the chassis 14. The lamp clips 18 are provided for mounting the cold cathode tube 17 to the chassis 14. The relay connectors 19 are connected to ends of the cold cathode tubes 17 for making electrical connection. The lamp holders 20 collectively cover ends of the cold cathode tubes 17 and the relay connectors 19. A light emitting side of the backlight device 12 is a side closer to the diffuser plate 15a than the cold cathode tubes 17.

The chassis 14 is prepared by processing a metal plate. It is formed in a substantially shallow box shape with a depth of 8.0 mm. It includes a rectangular bottom plate 14a and outer rim portions 21, each of which extends upright from the corresponding side of the bottom plate 14a and has a substantially U shape. The outer rim portions 21 include short-side outer rim portions 21a and long-side outer rim portions 21 provided at the short sides and the long sides of the chassis 14, respectively. The bottom plate 14a has a plurality of through holes, that is, mounting holes 22, along the long-side edges thereof. The relay connectors 19 are mounted in the mounting holes 22. As illustrated in FIG. 3, fixing holes 14c are provided on the top surface of the chassis 14 along the long-side outer rims 21b to bind the bezel 13, the frames 16 and the chassis 14 together with screws and the like.

A light reflecting sheet 23 is disposed on an inner surface of the bottom plate 14a of the chassis 14 (on a side that faces the cold cathode tubes 17). The light reflecting sheet 23 is a synthetic resin sheet having a surface in white color that provides high light reflectivity. It is placed so as to cover almost entire inner surface of the bottom plate 14a of the chassis 14. As illustrated in FIG. 3, long-side edges of the light reflecting sheet 23 are lifted so as to cover the long-side outer rims 21b of the chassis 14 and sandwiched between the chassis 14 and the diffuser plate 15a. With this light reflecting sheet 23, light emitted from the cold cathode tubes 17 is reflected toward the diffuser plate 15a. On the outer surface of the bottom plate 14a of the chassis 14 (on a side opposite from the cold cathode tubes 17), inverter board sets 30 are provided for supplying power to the cold cathode tubes 17.

On the opening 14b side of the chassis 14, the diffuser plate 15a and the optical sheets 15b are provided. The diffuser plate 15a includes a synthetic resin plate containing scattered light diffusing particles. It diffuses linear light emitted from the cold cathode tubes 17. The short-side edges of the diffuser plate 15a are placed on the first surface 20a of the holder 20 as described above, and does not receive a vertical force. As illustrated in FIG. 3, the long-side edges of the diffuser plate 15a are sandwiched between the chassis 14 (more precisely the reflecting sheet 23) and the frame 16 and fixed.

The optical sheets 15b provided on the diffuser plate 15a includes a diffuser sheet, a lens sheet and a reflecting type polarizing plate layered in this order from the diffuser plate 15a side. Light emitted from the cold cathode tubes 17 passes through the diffuser plate 15a and enters the optical sheets 15b. The optical sheets 15b are provided for converting the light to planar light. The liquid crystal display panel 11 is disposed on the top surface of the top layer of the optical sheet 15b. The optical sheet 15b are held between the diffuser plate 15a and the liquid crystal panel 11.

Each cold cathode tube 17 has an elongated tubular shape. A plurality of the cold cathode tubes 17 (twenty tubes in this embodiment) are installed in the chassis 14 such that they are arranged parallel to each other with the long-side direction thereof (the axial direction) aligned along the long-side direction of the chassis 14 (see FIG. 2). Each end of each cold cathode tube 17 has a terminal (not shown) for receiving drive power and is fitted in the corresponding relay connector 19. The holders 20 are mounted so as to cover the relay connectors 19.

In this embodiment, sizes of the cold cathode tubes 17 and their arrangements are defined as follows. The diameter of each cold cathode tube 17 used in this embodiment is 4.0 mm. The distance between the cold cathode tubes 17 and the light reflecting sheet 23 is 0.8 mm. The distance between the adjacent cold cathode tubes 17 is 16.4 mm. The distance between the cold cathode tubes 17 and the diffuser plate 15a is 2.7mm. In this backlight device 12, distances between the components are defined so as to reduce the thickness of the backlight device 12. Especially, the distance between the cold cathode tubes 17 and the diffuser plate 15a and the distance between the cold cathode tubes 17 and the reflecting sheet 23 are reduced. Because of the thickness reduction of the lighting device 12, the liquid crystal display device 10 and that of the television receiver TV are provided with the following thicknesses. The thickness of the liquid crystal display device 10 (i.e., the thickness between the front surface of the liquid crystal panel 11 and the back surface of the backlight device 12) is 16 mm. The thickness of the television receiver TV (i.e., and the thickness between the front surface of the front cabinet Ca and the back surface of the rear cabinet Cb) is 34 mm. Namely, a thin television receiver is provided.

The holders 20 that cover the ends of the cold cathode tubes 17 are made of white synthetic resin. Each of them has an elongated substantially box shape that extends along the short side of the chassis 14. As illustrated in FIG. 4, each holder 20 has steps on the front side such that the diffuser plate 15a and the liquid crystal panel 11 are held at different levels. A part of the holder 20 is placed on top of a part of the corresponding short-side outer rim 21a of the chassis 14 and forms a side wall of the backlight device 12 together with the short-side outer rim 21a. An insertion pin 24 projects from a surface of the holder 20 that faces the outer rim 21a of the chassis 14. The holder 20 is mounted to the chassis 14 by inserting the insertion pin 24 into the insertion hole 25 provided in the top surface of the short-side outer rim 21a of the chassis 14.
The steps of the holder 20 include three surfaces parallel to the bottom plate 14a of the chassis 14. The short edge of the diffuser plate 15a is placed on the first surface 20a located at the lowest level. A sloped cover 26 extends from the first surface 20a toward the bottom plate 14a of the chassis 14. A short edge of the liquid crystal panel 11 is placed on the second surface 20b. The third surface 20c located at the highest level is provided such that it overlaps the short-side outer rim 21a of the chassis 14 and comes in contact with the bezel 13.

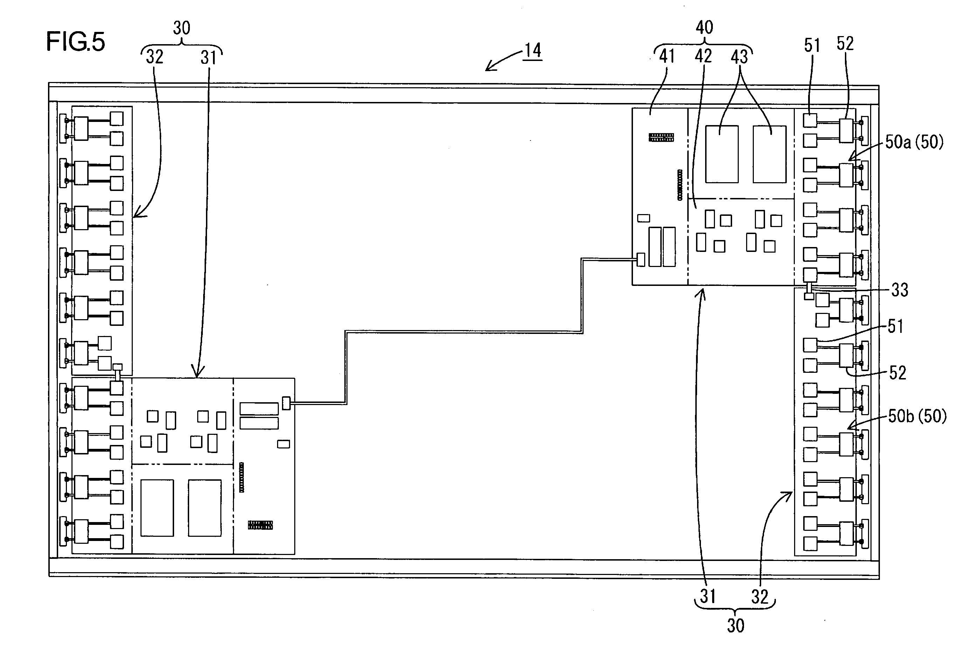

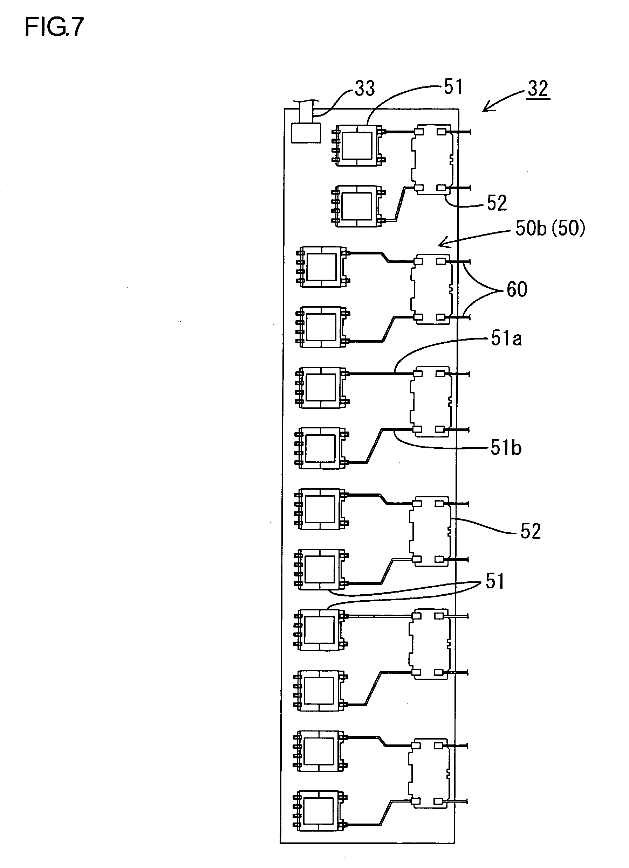

Next, the inverter board sets 30 arranged on the back surface of the chassis 14 will be explained with reference to FIGS. 5 and 7.

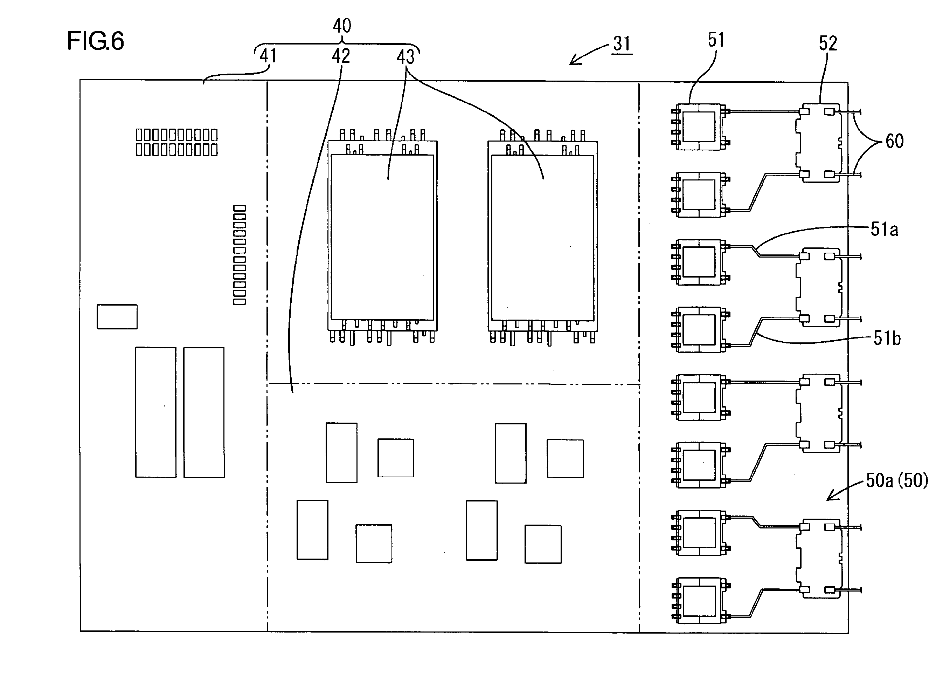

FIG. 5 is a plan view illustrating general configurations of the invert board sets. FIG. 6 is a plan view illustrating a configuration of the first boards included in the invert board sets. FIG. 7 is a plan view illustrating a configuration of the second boards included in the invert board sets.
The inverter board sets 30 are mounted to the rear surface of the bottom plate 14a of the chassis 14 (i.e., on the side opposite from the side on which the cold cathode tubes 17 are arranged). They are configured to supply drive power to the cold cathode tubes 17 and controls on-off operation of the cold cathode tubes 17.

As illustrated in FIG. 5, each inverter board set 30 includes the first board 31 having a rectangular shape and the second board 32 having a rectangular shape narrower than the first board 31. The first board and the second board are arranged adjacent to each other with a small gap therebetween. The inverter board sets 30 are arranged near ends of the long side of the chassis 14 (so as to overlap the respective ends of the cold cathode tubes 17). In this embodiment, the first boards 31 are arranged diagonal to each other on the chassis 14, that is, near the different long sides of the chassis 14. The second boards 32 are arranged in the same manner.

The first boards 31 are arranged with the longitudinal direction thereof aligned along the long-side direction of the chassis 14. As illustrated in FIG. 6, each first board 31 includes a driver circuit 40 and the first regulator seciton 50a. The driver circuit 40 is provided on the first board 31 around the center of the chassis 14. It includes a control circuit 41, a switching circuit 42 and a high voltage generator 43. The control circuit 41 is configured to output control signals for generating predetermined frequencies to control the drive power output. The switching circuit 42 is configured to switch the drive power supply on and off for changing the direction of current flowing through the high voltage generator 43, which will be explained later, based on the control signals. The high voltage generator 43 is configured to output the drive power generated at a voltage higher than an input voltage. The drive power is supplied from the driver circuit 40 to the first regulator section 50a through circuit patterns on the board.

The first regulator section 50a includes flux couplers 51 and connectors 52 arranged on the first board 31 in an outer area than where the driver circuit 40 is provided and along the short side of the chassis 14.

The flux couplers 51 are configured to adjust balance of currents supplied to the cold cathode tubes 17. Eight flux couplers 51 are arranged in line on the first board 31 along the short-side direction of the chassis 14. The connectors 52 are provided for making electrical connection between the driver circuit 40 and the cold cathode tubes 17. Four connectors 52 are arranged in line on the first board 31 along the short-side direction of the chassis 14. Each connector 52 is arranged so as to overlap ends of two cold cathode tubes 17. Every two flux couplers 51 are electrically connected to the corresponding connector 52 via electrical wires 51a, 51b, each of which extends from either one of the flux couplers 51.

Two harnesses 60 extend from each one of the connectors 52 arranged on the first board 31 and the second board 32. The harnesses 60 are connected to respective terminals provided at ends of the cold cathode tubes 17 inside the relay connector 19. Namely, two cold cathode tubes 17 are connected to one connector 52. The harnesses 60 function as electrical lines for supplying drive power from the driver circuit 40 to the cold cathode tubes 17 via the flux couplers 51, the connectors 52 and the harnesses 60.

The second boards 32 are arranged with the longitudinal direction thereof aligned along the short-side direction of the chassis 14. As illustrated in FIG. 7, each of them includes the second regulator section 50b. More specifically, twelve of the flux couplers 51 that are the same kind as the ones arranged on the first boards 31 are arranged in line along a long side of the second board 62 in an inner area of the chassis 14. Six connectors 52 that are the same kind as the ones arranged on the first boards 31 are arranged in line in an outer area of the chassis 14 than where the flux couplers 51 are arranged along the short-side direction of the chassis 14.
Each regulator circuit 50 including the flux couplers 51 and the connectors 52 has two sections, the first regulator section 50a and the second regulator section 50b provided on the first board 31 and the second board 32, respectively. In this embodiment, the regulator circuit 50 is a circuit for maintaining the balance of the currents supplied to the light sources by connecting the cold cathode tubes 17 using the flux couplers 51 such that a secondary current flows in series. However, it may include a circuit in which current transformers are connected in tournament tree structure for shunt of the light source currents using flux couplers or a circuit in which ballast components are arranged.

The drive power output from the driver circuit 40 on the first board 31 is supplied to the second regulator section 50b on the second board 32 via the high voltage line 33 that connects the first board 31 to the second board 32. Because the first board 31 and the second board 32 are adjacently arranged with a small gab therebetween, the length of the high voltage line 33 between them is very small.

The first boards 31 are arranged in areas located near the ends of the long side of the chassis 14, namely, in the area that overlaps one of ends of each cold cathode tube 17 and the area that overlaps the other end of the cold cathode tube 17. The driver circuits 40 provided on the respective first boards 31 are connected to each other via a synchronizing signal line 44. The synchronizing signal line 44 is configured to transmit signals for synchronizing power supplies from the driver circuits 40. Specifically, the synchronizing signals are for synchronizing the amounts and the timing of the power supplies. It is routed in contact with the chassis 14. The driver circuits 40 for supplying drive power to the respective ends of the cold cathode tubes 17 are connected to each other via the synchronizing signal line 44. Therefore, the drive power is supplied to the respective ends of the cold cathode tubes 17 with a predetermined regularity.

The television receiver TV, the liquid crystal display device 10 and backlight device 12 of this embodiment having such configurations provide the following operational effects.
The inverter board sets 30 included in the backlight device 12 of the present invention include the regulator circuits 50 for adjusting the balance of current flow between the cold cathode tubes 17 and the driver circuits 40 for supplying the drive power to the cold cathode tubes 17 via the regulator circuits 50. The first boards 31 and the respective second boards 32 are arranged with a small gap therebetween. Each regulator circuit 50 includes two sections, the first regulator section 50a and the second regulator section 50b on the first board 31 on the second board 32, respectively. The first board 31 on which the first regulator section 50a is provided further includes the driver circuit 40.

In this configuration, the first regulator sections 50a and the driver circuits 40 are both provided on the first boards 61. Therefore, the power is supplied from each driver circuit 40 to the corresponding first regulator section 50a through the circuit patterns on the first board 31. Namely, high voltage lines used in known configurations for making connections between them are not required. Because each first board 31 and the corresponding second board 32 are adjacently arranged, only the minimum length is required for the high voltage line 33 that connect the driver circuit 40 on the first board 31 to the second regulator section 50b on the second board 32. This ensures a high level of safety. Further, even in the thin backlight device 12 where components are closely arranged, only small space is required around the high voltage lines 33. Therefore, the arrangement of the components can be designed at a high degree of flexibility.

Each regulator circuit 50 is configured to adjust the balance of the currents flowing between the cold cathode tubes 17. For different arrangement patterns of the cold cathode tubes 17 (e.g., the different number of the tubes), different circuit patterns are required in the regulator circuit. In this embodiment, eight flux couplers 51 and four connectors 52 are provided on the corresponding first board 31, and twelve flux couplers 51 and six connectors 52 are provided on the corresponding second board 32. Namely, the regulator circuit 50 including the first and the second boards 31 and 32 includes twenty flux couplers 51 and ten connectors 52. Therefore, the regulator circuit 50 can support twenty cold cathode tubes 17.

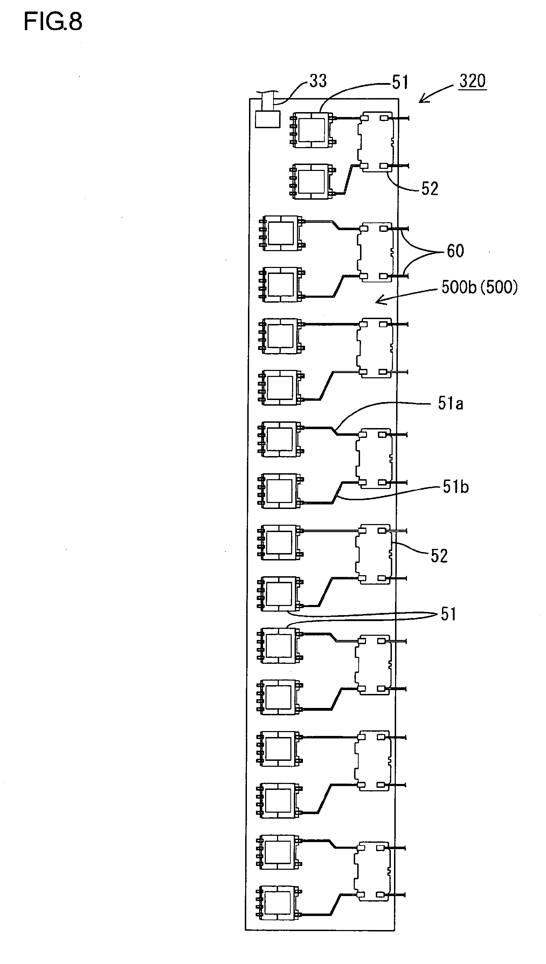

If the backlight device 12 is provided in a large size and requires a larger number of cold cathode tubes 17 (e.g., twenty-four tubes), regulator circuits 500 including twenty-four flux couplers 51 and twelve connectors 52 are required. According to the configuration of the present invention, each regulator circuit 500 includes two sections, one provided on the first board 31 and the other provided on the second board 32. To support a larger number of cold cathode tubes 17, only the second boards 32 need to be replaced by boards 320 including regulator sections 500b having different circuit patterns. More specifically, each second board 32 is replaced by the board 320 including the regulator section 500b having sixteen flux couplers 51 and eight connectors 52 illustrated in FIG. 8. Namely, each first board 31 including the first regulator section 50a and the driver circuit 40 can be used in any size of the backlight device 12. This contributes to a cost reduction.

In this embodiment, the first boards 31 and the second boards 32 are arranged on the chassis 14 in the areas that overlap the ends of the cold cathode tubes 17.
The drive power output from each driver circuit 40 provided on the corresponding first board is supplied to the terminals provided at the ends of the cold cathode tubes 17 via the flux couplers 51, the connectors 52 and the harnesses 60 extending from the connectors 52 provided on the first board 31 and the second board 32. By providing each first board 31 and second board 32 on the chassis 14 in the area that overlaps the ends of the cold cathode tubes 17, only minimum distances are required between the ends of the cold cathode tubes 17 and the first board 31 or the second board 32. Namely, the harnesses 60 require small lengths. This contributes to a cost reduction and current leakages from the harnesses 60 to peripheral components are less likely to occur. Therefore, a high level of safety can be achieved.

In this embodiment, the first boards 31 are arranged in the area that overlaps one of ends of each cold cathode tube 17 and in the area that overlaps the other end of the cold cathode tube 17. The driver circuits 40 on the respective first boards 31 are connected with each other via the synchronizing signal line 44 for transmitting signals to synchronize the power supplies.
In this configuration, the drive power outputs are supplied from the driver circuits 40 on the first boards 31 to the ends of the cold cathode tubes 17 with the amounts and timing defined based on predetermined rules. For example, the same amount of power is supplied to the ends of one cold cathode tube 17 at the same time when the driver circuits 40 are synchronized. As a result, the cold cathode tube 17 provides uniform luminance and thus the uniform luminance distribution of the backlight device 12 can be achieved.

In this embodiment, the synchronizing signal line 44 is routed in contact with the chassis 14. Because only very weak current flows through the synchronizing signal line 44, space between the synchronizing signal line 44 and peripheral components are not required. Therefore, the synchronizing signal line 44 can be routed in contact with the chassis 14. Since an arrangement of the synchronizing signal line 44 can be designed without consideration of relative locations to the peripheral components, the route can be designed at a high degree of flexibility

### <Second Embodiment>

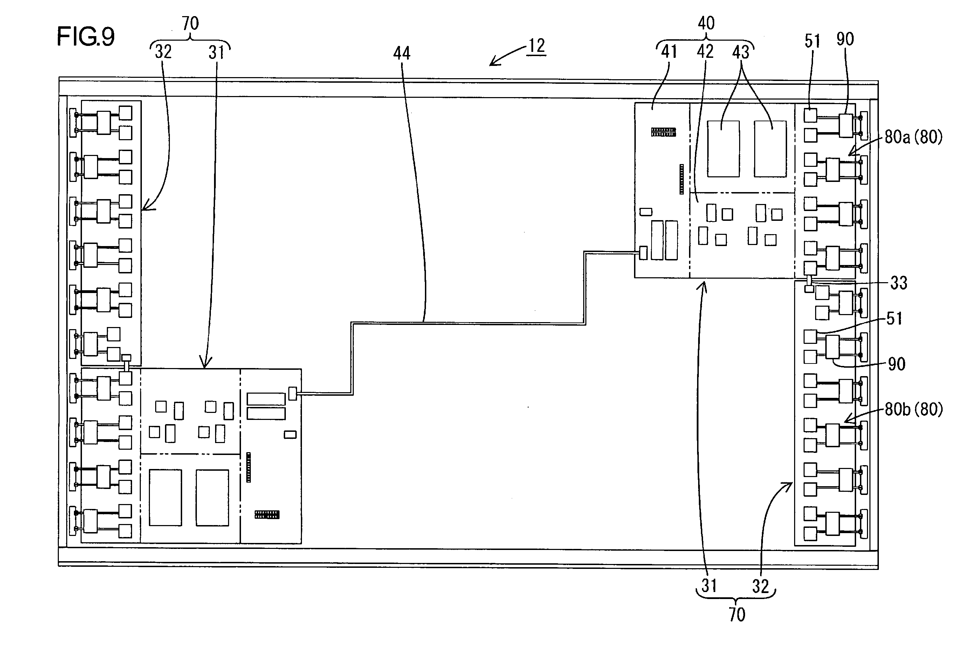

Next, the second embodiment of the present invention will be explained with reference to FIGS. 9 to 15. In this embodiment, arrangements and configuration of connectors provided in an inverter board set are different. Other configurations are the same as the previous embodiment. The same parts as the previous embodiment are indicated by the same symbols and will not be explained.
First, the configuration of an inverter board set 70 will be explained with reference to FIGS. 9 to 11.

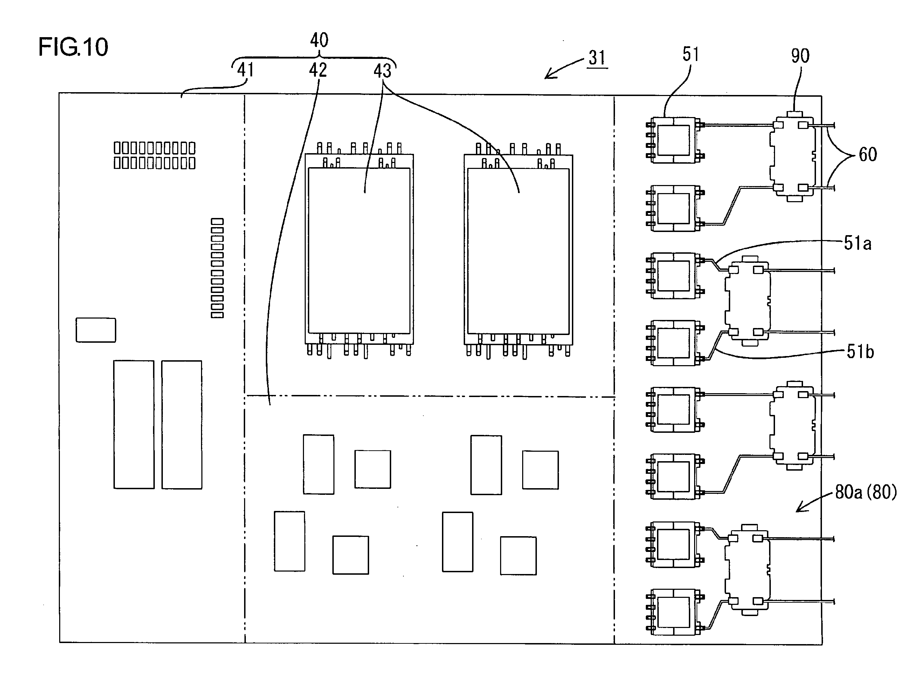

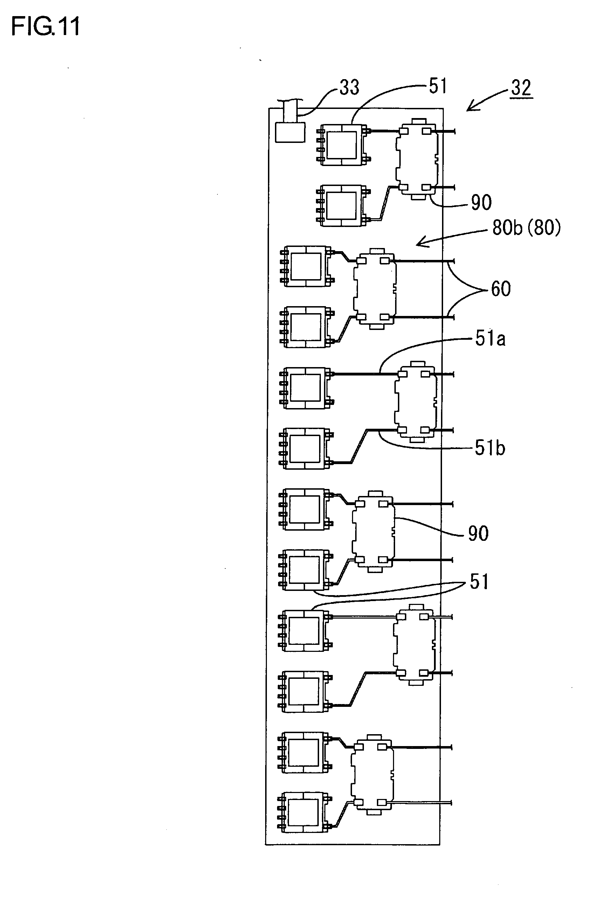

FIG. 9 is a plan view illustrating general configurations of inverter board sets according to this embodiment. FIG. 10 is a plan view illustrating the first board included in each invert board set. FIG. 11 is a plan view illustrating the second board included in each invert board set.

As illustrated in FIG. 9, each inverter board set 70 includes the first board 31 and the second board 32. Each first board 31 includes the driver circuit 40 and the first regulator section 80a. The first regulator section 80a includes a plurality of the flux couplers 51 and connectors 90 arranged along the short-side direction of the chassis 14. The flux couplers 51 are configured to adjust balance of currents supplied to the cold cathode tubes 17. Eight couplers 51 are arranged on each first board 31 along the short-side direction of the chassis 14.

The connectors 90 are provided for making electrical connection between the driver circuit 40 and the cold cathode tubes 17. Four connectors 90 are arranged on each first board 31 such that each one of them overlaps the ends of two cold cathode tubes 17. As illustrated in FIG. 10, the connectors 90 are arranged on each first board 31 such that the adjacent connectors 90 are staggered in the long-side direction of the first board 31 (i.e., the long-side direction of the chassis 14), that is, they are not arranged on a single line. Specifically, the first connector 90 is arranged near the short-side edge of the first board 31. The second connector 90 is arranged next to the first connector 90 on the first board 31 further inside than the first connector 90 by the width of the connector 90. The third connector 90 is arranged near the short-side edge of the first board 31, that is, in line with the first connector 90. When an alignment line of the second connector 40 (on which the second, the fourth, the sixth, ... connectors are arranged) is taken as a reference, the first and the third connectors 40 are off the alignment line.

When the connectors 90 are arranged in the above manner, the connectors 90 are arranged such that an area in which the adjacent connector 90 is not arranged is provided on either side of each connector 90. The connectors 90 are arranged alternately on the short-side-edge side and on the inner side of the first board 31 and the inner side of the first board 31 so as to form two lines such that the adjacent connectors 90 are staggered. Namely, the connectors 90 are arranged in a zigzag pattern along the long-side direction of each regulator board 32 (i.e., the short-side direction of the chassis 14).

Each second board 32 is arranged such that the longitudinal direction thereof matches the short-side direction of the chassis 14. The second board 32 includes the second regulator section 80b. More specifically, as illustrated in FIG. 11, the second board 32 includes twelve flux couplers 51 arranged in line near the long-side edge thereof located on the inner side of the chassis 14. The flux couplers 51 are the same kind of the ones that arranged on the first board 31. It further includes six connectors 90 arranged in a staggered layout, in the same manner as the ones on the first board 31 in the area located on the outer side of the chassis 14 with respect to the flux couplers 51. The connectors 90 are the same kind of the ones that arranged on the first board 31.

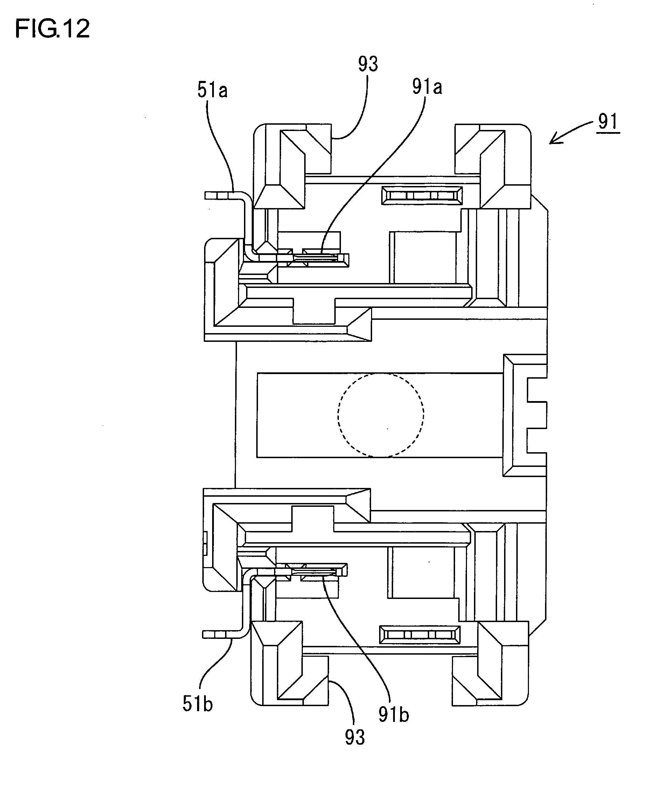

Next, the connectors 90 will be explained with reference to FIGS. 12 to 15.

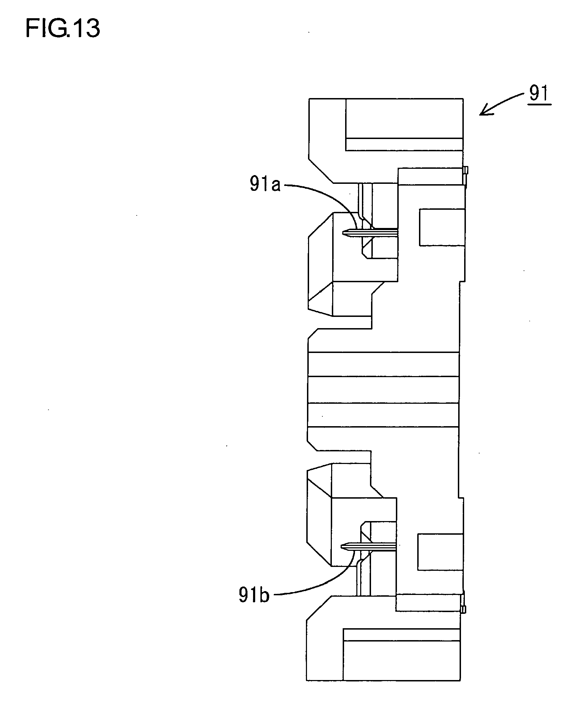

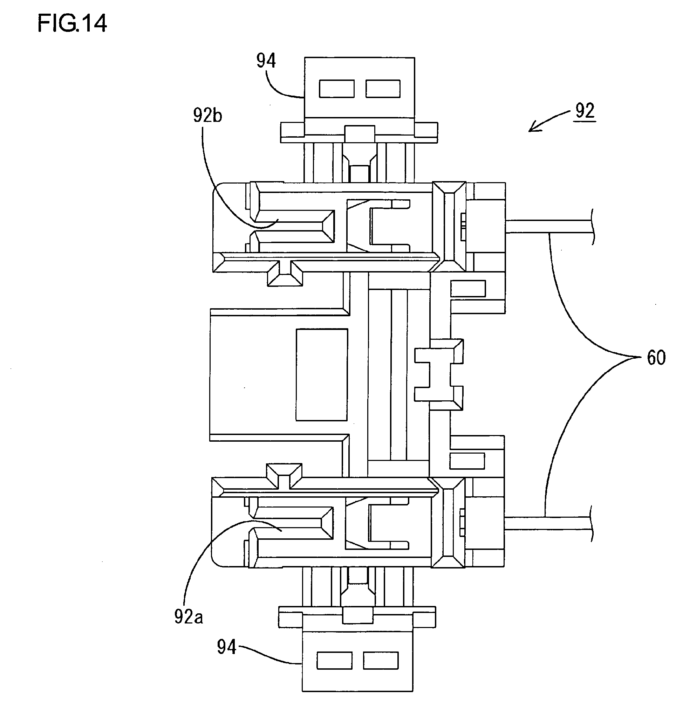

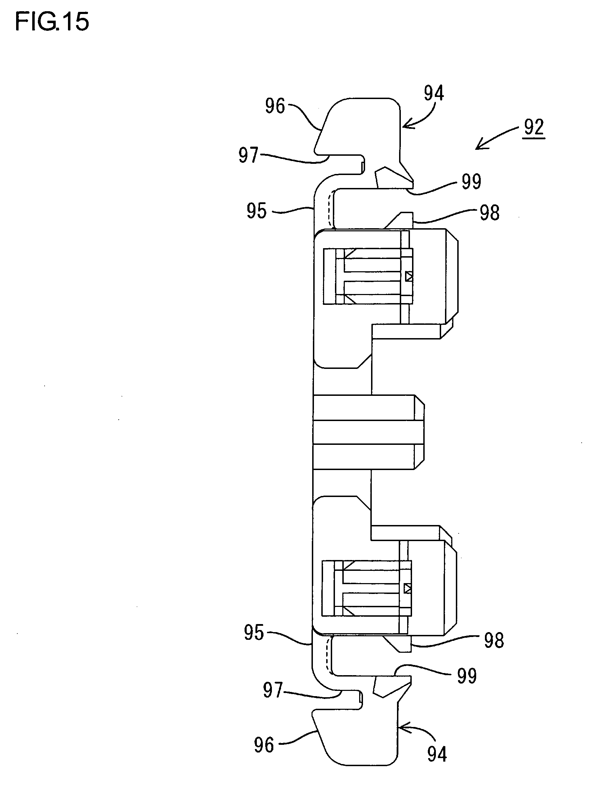

FIG. 12 is a top view illustrating the first connector part included in the connectors. FIG. 13 is a side view of the first connector part in FIG. 12. FIG. 14 is a bottom view of the second connector part included in the connectors. FIG. 15 is a side view of the second connector part in FIG. 14.
Each connector 90 includes the first connector part 91 and the second connector part 92. The first connector parts 91 are fixed to the first boards 31 and the second boards 32. The second connector parts 92 are attached to the first connector parts 91. The second connector parts 92 can be removed from the first connector parts 91. Each first connector part 91 is made of resin and has a substantially plate-like overall shape. As illustrated in FIGS. 12 and 13, it includes metal terminals 91a, 91b to which the electrical wires 51a, 51b extending from the flux couplers 51 are connected, respectively. Each of the terminals 91a, 91b includes two metal plates stand substantially upright from a flat surface of the first connector part 91 such that the electrical wire 51a or 51b is sandwiched therebetween (see FIG. 11).
Furthermore, each first connector part 91 has stopper receptacles 93 on side walls that face toward the long-side direction of the chassis 14, that is, that face other first connector parts 91 mounted in line. They are provided for receiving stoppers 94 of the corresponding second connector part 92, which will be explained later.

Each second connector part 92 is made of resin and formed in a substantially plate-like overall shape. As illustrated in FIGS. 14 and 15, it includes metal receptacle terminals 91a, 91b, each of which has a recess for receiving the terminal 91a or 91b of the corresponding first connector part 91. When the terminals 91a, 91b of the first connector part 91 are inserted in the receptacle terminals 92a, 92b, respectively, the first connector part 91 and the second connector part 92 are electrically connected.

Each second connector part 92 has the stoppers 94 on side walls that are engaged with the stopper receptacles 93 of the corresponding first connector part 91. Each stopper 94 includes a support portion 95 having a plate-like shape and a grip portion 96 having a cantilever shape. The support portion 95 continues from the top surface of the second connector part 92 and an end thereof is curved downward. The grip portion 96 continues from the distal end of the support portion 95. A recess 97 is provided between the support portion 95 and the grip portion 95. It has an opening in the top surface of the second connector part 92. The second connector part 92 further includes a protrusion 98 having a substantially triangular prism-like shape below the support portion 95. An opening 99 is provided between the protrusion 98 and the support portion 95. The stopper 94 is made of resin and elastically flexible.

Each second connector part 92 is attached to the corresponding first connector part 91 as follows. First, the stoppers 94 of the second connector part 92 are held with fingers such that the bottom surface of the second connector part 92 (see FIG. 14) faces the top surface of the first connector part 91 fixed to the first board 31 or the second board 92 (see FIG. 12). When a gripping force is applied to the stoppers 94, the following elastic change occurs. When the griping force is also applied to the grip portions 96, they are pushed so as to close the openings of the recesses 97. As a result, the support portions 95 are bent away from the side walls of the second connector part 92 and the widths of openings 99 become larger. While the second connector part 92 is held in that manner, it is brought down in a substantially vertical direction, that is, in a direction substantially perpendicular to the surface of the first board 31 or the second board 32 and brought closer to the top surface of the first connector part 91. Then, the stoppers 94 of the second connector part 92 are inserted in the stopper receptacles 93 of the first connector 93. By releasing the fingers from the second connector part 92, the widths of the openings 99 become smaller due to elastic restoring force created by the stoppers 94. Therefore, the second connector part 92 is less likely to come off of the first connector part 91. The attachment of the second connector part 92 to the first connector part 91 is complete.

Two harnesses 70 extend from side walls of each second connector part 92 located on an outer edge side of the first board 31 or the second boards 32. They are connected to the receptacle terminals 92a, 92b. The distal ends of the harnesses 50 are connected to the terminals provided at the ends of the cold cathode tube 17, respectively, inside the relay connector 19. One connector 52 is connected to two cold cathode tubes 17.

The backlight device 12 of the present embodiment including the above-described configurations provides the following operational effects.
Each inverter board set 70 included in the backlight device 12 of the present embodiment includes a plurality of the connectors 90 for making electrical connections between the inverter board set 70 and the cold cathode tubes 17. The connectors 90 are arranged such that the adjacent connectors 90 are arranged in a staggered layout, that is, one is arranged on the outer edge side of the inverter board set 70 and the other is arranged on the inner side.
By arranging the connectors 90 in the staggered layout, larger space is provided between the adjacent connectors 90 in comparison to the connecters 90 arranged in line. Therefore, higher work efficiency and safety can be achieved.

In the backlight device 12, a plurality of the cold cathode tubes 17 are arranged on the inner surface side of the chassis 14 such that the axes thereof match the long-side direction of the chassis 14. The ends of the cold cathode tubes 17 are located in the side areas of the chassis 14 near the ends of the long sides of the chassis 14. The ends of the cold cathode tubes 17 are connected to the respective relay connectors 19. The harnesses 50 extend from the relay connectors 19 and project from the rear surface of the chassis 14. On the rear surface of the chassis 14, the inverter board sets 70 are mounted near the long-side ends of the chassis 14, respectively. The connectors 90 are mounted in the inverter board sets 70 in locations where they overlap the ends of the cold cathode tubes 17. Distal ends of the harnesses 50 are connected to the connectors 90. More specifically, the connectors 90 are arranged such that one connector 90 overlaps the ends of two cold cathode tubes 17 on one side. The adjacent connectors 90 are arranged such that one is located on the side close to the long-side edge of each inverter board set 70 and the other is located on the inner side. Namely, locations of the connectors 90 with respect to the longitudinal direction of the inverter board set 70 (or the short-side direction of the chassis 14) are determined based on the arrangement of the cold cathode tubes 17.

When a large number of the cold cathode tubes 17 are arranged at small intervals, the connectors 90 are also arranged at small intervals because areas of the inverter board sets 70 in which the connectors 90 can be mounted are limited (i.e., within the lengths of the inverter board sets 70). To arrange the connectors 90 at small intervals, the adjacent connectors 90 may interfere with each other during mounting work and that makes the mounting work difficult. Further, electrical discharge may occur between the adjacent connectors 90.

In the present invention, the adjacent connectors 90 are arranged in the staggered layout. Therefore, areas in which other connectors 90 are not arranged are provided on either side of each connector 90, namely, intervals between the connectors 90 are relatively large. This makes the connector mounting work easier and reduces the electrical discharge between the connectors 90. Therefore, high work efficiency and safety can be achieved.

In this embodiment, the connectors 90 include the first connector parts 91 mounted in the inverter board sets 70 and the second connector parts 92 attached to the first connector parts 91. The second connector parts 92 can be removed from the first connector parts 91 in the direction substantially perpendicular to the surfaces of the inverter board sets 70.

In each connector 90, to attach the second connector part 92 to the first connector part 91, the second connector part 92 is held and brought close to the first connector part 91 in the direction substantially perpendicular to the surface of the inverter board set 70. Especially in this embodiment, the second connector part 92 has the stoppers 94 on the side walls. The stoppers 94 are elastically bent and engaged with the first connector part 91. Namely, the stoppers 94 need to be held by fingers during the attachment work. If the interval between the adjacent connectors 90 is small, the connectors 90 that are already mounted could be obstacles for attaching another second connector part 92 to the connector 90 adjacent to them. Namely, the second connector part 92 or the fingers that hold the second connector part 92 may be obstructed by the adjacent connectors 90.
In the present invention, the connectors 90 are arranged in the staggered layout in the inverter board sets 70. Therefore, the intervals between the connectors 90 are relatively large and thus the attachment work of the second connector parts 92 to the first connector parts 91 can be easily done without being obstructed by the adjacent connectors 90.

### <Other Embodiments>

The present invention is not limited to the above embodiments explained in the above description. The following embodiments may be included in the technical scope of the present invention, for example.

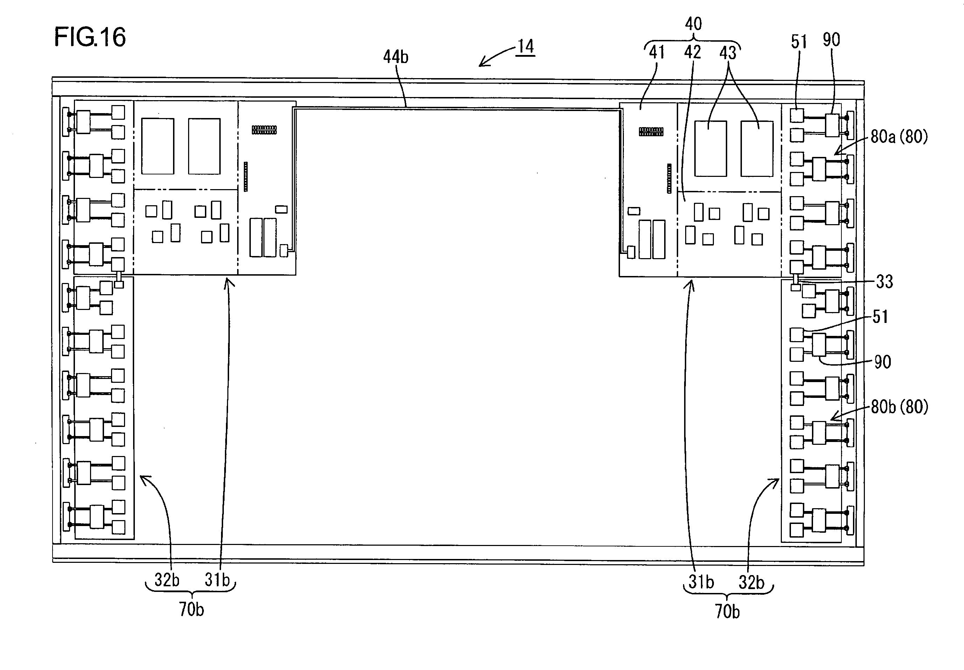

(1) In the above embodiments, the first boards and the second boards are arranged near the long-side ends of the chassis 14. The first boards are arranged diagonal to each other with respect to the chassis 14, and the second boards are arranged in the same manner. However, they may be arranged such as the first boards 31b and the second boards 32b illustrated in FIG. 16. Namely, the first boards 31b are arranged close to one of the long sides of the chassis 14, and the second boards 32b are arranged close to the other long side of the chassis 14. In this case, a synchronizing signal line 44b for connecting the first boards 31b to each other should be routed along the long side of the chassis 14.
In the above embodiments, the first boards and the second boards are arranged diagonally to each other, respectively. Namely, they are arranged symmetrically with respect to a reference point. When they are arranged in such a manner, not only the second boards but also the first boards having the same circuit pattern can be used for different arrangements in the end areas of the chassis 14.

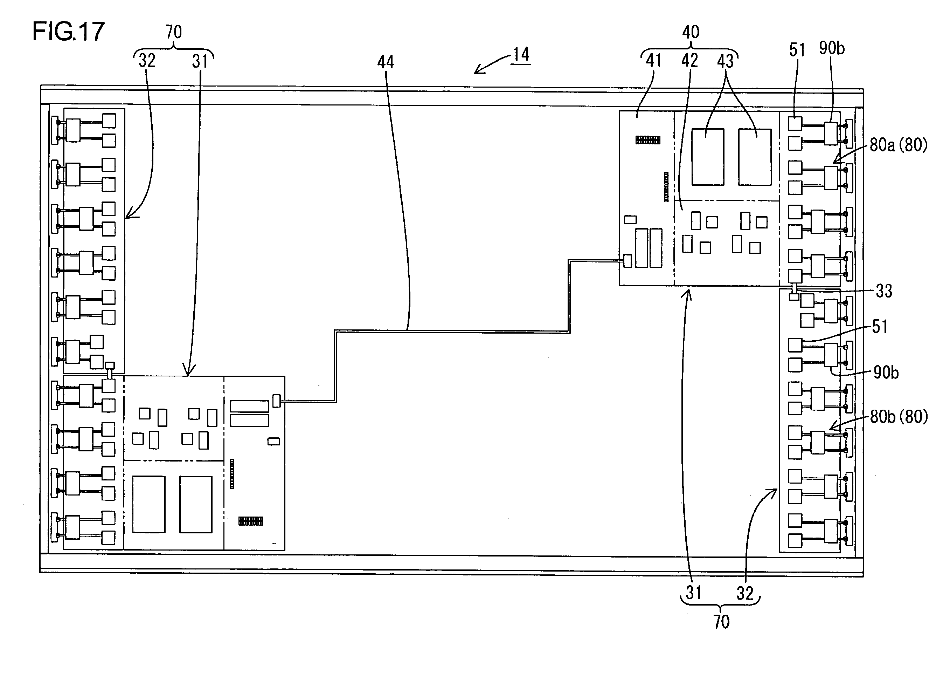

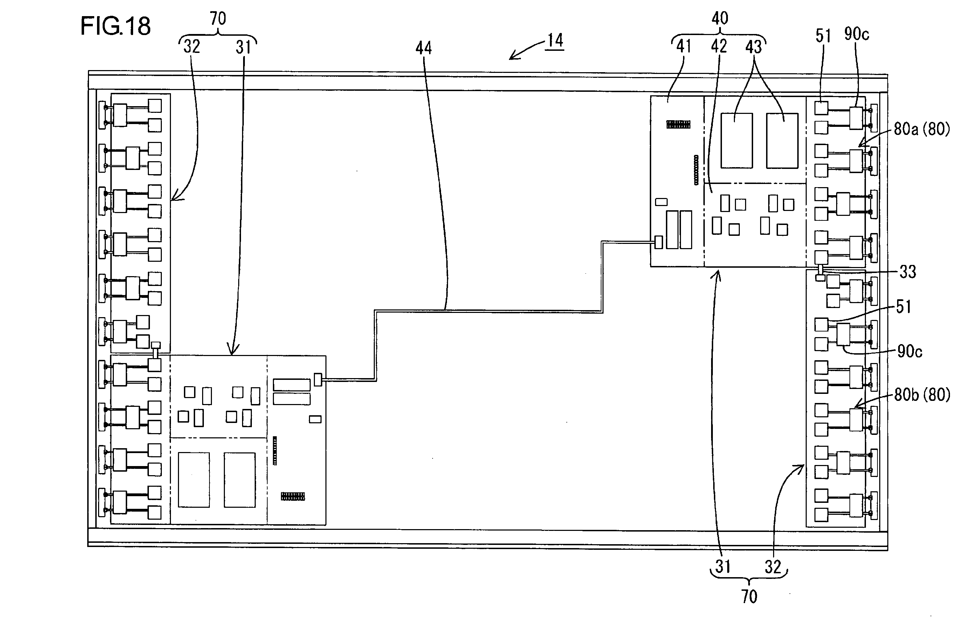

(2) In the second embodiment, the connectors 90 are arranged in the staggered layout on two lines on each regulator board. One line is located along the long-side edge of the regulator board and the other located inside the line. However, they can be arranged in different layout as long as they are not arranged on a straight line. Connectors 90b that are arranged such that every two of them are aligned so as to form two lines as illustrated in FIG. 17 are included in the technical scope of the present invention. Specifically, the first connector 90b and the second connector 90b that is next to the first connector 90b are arranged near the long-side edge of each regulator board, and the third connector 90b adjacent to the second connector 90b and the fourth connector 90b are arranged on the inner side. By arranging them in this manner, every two of the regulator boards 90b are alternately arranged so as to form two lines.
Another alternative staggered layout of the connectors 90 is illustrated in FIG. 18. Two connectors 90c and one connector 90c are arranged on two different lines, respectively. Specifically, the first connector 90c and the second connector 90c are arranged near the long-side edge of each regulator board, and the third connector 90c next to the second connector 90c is arranged on the inner side. By arranging them in this manner, the connectors 90c are arranged such that two of them are arranged on one line and the adjacent one is arranged on the other line so as to form two lines.

(3) In the above embodiments, each regulator circuit has two sections, one provided on the first board and the other provided on the second board. However, the sections may be configured differently. For example, a regulator circuit including three sections provided on three boards. The regulator circuit should include at least two different sections provided on two different boards.

(4) In the above embodiments, the first and the second boards on which the first and the regulator sections are provided are arranged near the ends of the long side of the chassis 14. However, they may be arranged near only one of the sides of the chassis 14. In this case, a preferable configuration is that the drive power is supplied to the cold cathode tubes 17 via one of the ends.

(5) In the above embodiments, the cold cathode tubes 17 are used as light sources. However, other types of light sources including hot cathode tubes can be used.

## Claims

1. A lighting device comprising:
a plurality of light sources;
a regulator circuit configured to adjust a balance of current flow between said light sources; and
at least one driver circuit configured to supply drive power to said light sources via said regulator circuit, wherein:
said regulator circuit includes a first section provided on a first board and a second section provided on a second board arranged adjacent to said first board; and
said driver circuit are provided on said first board on which first section of said regulator circuit is provided.

2. The lighting device according to claim 1, wherein:
said light sources are linear light sources; and
said first board and said second board are arranged so as to overlap ends of said linear light sources.

3. The lighting device according to claim 2, comprising:
at least two of said first boards arranged so as to overlap the ends of said linear light sources located on one side and another side, respectively; and
at least two of said driver circuits on said first board located on the one side and on said first board located on the other side, respectively, and connected with each other via a synchronizing signal line for transmitting a signal to synchronize power supplies from said driver circuits.

4. The lighting device according to claim 3, further comprising a chassis for housing said light sources, wherein:
said first boards and said second board are mounted to said chassis; and
said synchronizing signal line is routed so as to be in contact with said chassis.

5. The lighting device according to any one of claims 1 to 4, further comprising a plurality of connectors arranged on said first board and said second board for making electrical connection between said driver circuit and said light sources, wherein:
some of said connectors are arranged on a linear alignment line; and
at least one of said connectors arranged adjacent to any one of said connectors arranged on the alignment line is arranged off said alignment line.

6. The lighting device according to claim 5, wherein said connectors are arranged such that the any one of said connectors arranged on the alignment line and the connectors arranged adjacent thereto are arranged in a staggered layout.

7. The lighting device according to any one of claims 5 and 6, wherein said connectors are arranged in a staggered layout.

8. The lighting device according to any one of claims 5 to 7, wherein said connectors include first connector parts mounted on said first board and said second board, and second connector parts attached to said first connector parts such that said second connector parts can be removed from said first connector parts in directions that cross board surfaces of said first board and said second board.

9. A display device comprising:
the lighting device according to any one of claims 1 to 8; and
a display panel configured to provide display using light from said lighting device.

10. The display device according to claim 9, wherein the said display panel is a liquid crystal display panel using liquid crystal.

11. A television receiver comprising the display device according to any one of claims 9 and 10.
